# NEUE EUROPÄISCHE PATENTSCHRIFT

(11) **EP 0 154 135 B2**
(45) Veröffentlichungstag und Bekanntmachung des Hinweises auf die Entscheidung über den Einspruch: **02.11.1994**
(45) Hinweis auf die Patenterteilung: 09.08.1989
(21) Anmeldenummer: 85100620.5
(22) Anmeldetag: 22.01.1985
(51) Int. Cl.: A21D 8/04, A21D 2/18

(54) **Verfahren zum Herstellen eines Brotteiges**
Process for the preparation of a bread dough
Procédé de préparation d'une pâte à pain

(30) Priorität: 27.01.1984 DE 3402778; 16.10.1984 DE 3437789
(43) Veröffentlichungstag der Anmeldung: 11.09.1985
(73) Patentinhaber: Lieken-Batscheider Mühlen- und Backbetriebe GmbH, D-55120 Mainz (DE)
(72) Erfinder:
(74) Vertreter: Goddar, Heinz J., Dr.

(56) Entgegenhaltungen:
- BE-A- 816 571
- DE-A- 2 352 306
- DE-C- 578 026
- FR-A- 2 203 263
- FR-A- 2 406 665
- CHEMICAL ABSTRACTS, Band 85, Nr.25, 20. Dezember 1976, Seite 427, Ref.Nr. 1191088x, Columbus, Ohio, US; & HU-A- 11 663 (MAGYAR EDESIPAR) 28.06.1976
- Getreide, Mehl und Brot, 3.Jahrg., Seiten 100/101 (1949)
- Getreide, Mehl und Brot, 37. Jahrg., Seiten 17/18 (1983)
- Dr. Manfred Rothe, Akademie-Verlag Berlin, Seiten 28 bis 33 (1974)
- M.Rohrlich, "Getreideenzyme", P. Parey-Verlag, Seiten 103 bis 109 (1969)
- H.-H. Dörfner " Der ph-Wert und seine Bedeutung in der Bäckerei", Sonderdruck aus " der Industriebackmeister", Heft 4 (1971)
- H.-H. Dörfner "Fehlermöglichkeiten bei der Bestimmung von ph-Wert und Säuregrad in Teigen und Broten", Sonderdruck aus "die brotindustrie", 16. Jahrg., Seiten 76 bis 78 (1973)
- Enzymes in Food Processing, 2. Auflage, Seite 316 (1975)

## Beschreibung

Die Erfindung betrifft ein Verfahren zum Herstellen eines Brotteiges unter Verwendung eines Brühstückanteils nach dem Oberbegriff von Patentanspruch 1 oder 2.

Es ist bekannt, zur Herstellung von Brotteigen Brühstücke zu verwenden. Zur Erzielung eines abgerundeteren Brotgeschmacks und einer ausreichenden Saftigkeit der Brotkrume werden dem Teig außerdem häufig zusätzlich Zucker oder Süßungssirup sowie Quellstoffe hinzugefügt. Insbesondere durch diese Maßnahmen wird der aus dem vollen Korn stammende Anteil an wertgebenden Getreideinhaltsstoffen vermindert, darunter vor allem an Vitaminen, Mineral-, Quell- und Ballaststoffen sowie den Vorläufern für brottypische Geschmacksstoffe. Es hat sich außerdem gezeigt, daß die Verwendung dieser technisch notwendigen Zusatzstoffe die erstrebte Wirkung auf die Saftigkeit der Krume und die damit verbundene Frischhaltung sowie die Ausbildung des brottypischen Geschmacks nicht in dem wünschenswerten Umfang bewirkt, wie das an sich vorteilhaft wäre.

Aus "Getreide, Mehl und Brot", Heft 11/12, 1949, Seiten 100/101, ist ein Verfahren der gattungsgemäßen Art bekannt, bei dem zur Herstellung eines süßeren Pumpernickels eine Stärkeverzuckerung durch Verwendung von Malzmehl zur enzymatischen Behandlung des gesamten Brühstückanteiles erfolgt. Nach Ablauf der Verzuckerung wird, um eine Schwächung des Verkleisterungsvermögens des zum Teig zugesetzten Mehles durch das in der Maische enthaltene Malzmehl gänzlich zu verhüten, die Maische ungefähr 10 Minuten über 70 _{°} C erhitzt. Dabei soll eine größtmögliche Ausbeute an Glukose erzielt werden, welche ungefähr die doppelte Süßkraft der Maltose besitzt. Die Verwendung von Malzmehl kann, aufgrund der in ihm enthaltenen Enzyme, a- und β-Amylase, und der vor allem durch die ß-Amylase gegebenen spezifischen Bildung von Maltose, weit überwiegend nur zu einer Anhäufung von Maltose und nicht, wie bei der Verwendung von Amyloglukosidase, zur spezifischen Bildung von Glukose führen, die sowohl aus Maltose als auch aus höherpolymeren a-Glukanen unter der Wirkung dieses Enzymes entsteht. Der nach diesem Verfahren hergestellte Brotteig ergibt noch nicht in gewünschten Maße eine saftigere Krume und damit ein verbessertes Frischhaltevermögen sowie einen vollen, brottypischen Geschmack.

Ferner ist aus "Vollkornbrot" von P. Pelshenke, 1940, Seiten 35 bis 36, ein Verfahren ähnlich dem gattungsgemäßen bekannt, bei dem der Brühstückanteil, bezogen auf die Trockensubstanz der eingesetzten Getreidebestandteile, 1 bis 50 Gew.-% beträgt und insgesamt ohne oder unter Zusatz von geschrotetem Roggen bzw. Weizenmehl einer unvollständigen enzymatischen Behandlung unterworfen wird, die so erfolgen soll, daß kein zu großer Stärkeabbau eintritt, welcher zu einer feuchten, klitschigen Krume sowie zu schlechter Lockerung, außerdem auch zu einer schlechte Bindung des freien Wassers führen würde. Durch diesen enzymatischen Abbau des gesamten Brühstückanteiles werden aber vergärbare Zucker nicht in dem Umfang gebildet, als daß damit durch den Brühstückanteil selbst eine stärkere Süßungswirkung erzielt werden könnte, als das üblicherweise der Fall ist.

Der Erfindung liegt die Aufgabe zugrunde, ein Verfahren der eingangs genannten Art zu schaffen, mit dem sich ohne Zusatz üblicher Süßungsmittel, wie Rübensirup oder dergleichen, eine saftigere Krume und damit ein verbessertes Frischhaltevermögen und ein vollerer, brottypischer Geschmack ergibt, als das mit Brotteigen bisher bekannter Art möglich ist, ohne daß die spezifische pH-Werteinstellung beim enzymatischen Abbau mit Hilfe des Zusatzes irgendwelcher Chemikalien erfolgen muß.

Erfindungsgemäß wird diese Aufgabe bei einem Verfahren der gattungsgemäßen Art durch die im Kennzeichen von Patentanspruch 1 oder 2 aufgeführten Merkmale gelöst.

Besonders bevorzugte Ausführungsformen des erfindungsgemäßen Verfahrens sind Gegenstand der Unteransprüche 3 bis 11.

In besonders vorteilhafter Weise kann bei der Erfindung also vorgesehen sein, daß sowohl der Weizen- und/oder Roggenschrotanteil als auch der Restbrotanteil zusammen mit dem Brühstückanteil durch Mischen in geeigneter Reihenfolge derart aufeinander eingestellt werden, daß für den enzymatischen Abbau der verkleisterten Glukosepolymere mit a-Amylase und Amyloglukosidase jeweils annähernd optimale pH-Werte ergeben. Für den Fall der Isomerisierung der gebildeten Glukose ist dabei, wie dargestellt, vorgesehen daß die Anteile aus Weizen-und/oder Roggenschrot, Restbrot und Brühstück derart aufeinander eingestellt sind, daß der pH-Wert der mit Glukose-Isomerase zu behandelnden Ansätze ca. 6, 5 beträgt.

Bei der Erfindung werden Teile der stärkehaltigen Teigbestandteile, darunter insbesondere die aus dem vollen Korn stammenden, vor dem Teigbereiten in Verbindung mit der Brühstückherstellung zumindest teilweise enzymatisch zu niederpolymeren Kohlenhydraten, wie Dextrinen, Maltose und Glukose abgebaut, wobei letztere ggf. zu Fruktose umgewandelt wird. Die mengenmäßigen Anteile dieser Kohlenhydrate im Brühstückansatz können entsprechend dem erfindungsgemäßen Verfahren in bezug auf die erstrebten sensorischen Eigenschaften des Brotes variabel gestaltet werden.

Dadurch, daß erfindungsgemäß zumindest ein Teil der stärkehaltigen Teigbestandteile vor dem Anlegen teilweise oder ganz enzymatisch zu niederpolymeren Kohlenhydraten abgebaut und umgewandelt wird, gelingt es in überraschender wirkungsvoller Weise, die insbesondere bei der Vollkombrotherstellung zu beobachtenden Nachteile in der Gebäckqualität zu überwinden. Die Brote besitzen aufgrund eines höheren Anteils nicht stärkehaltiger Quellstoffe, die aus den Getreiderohstoffen stammen eine saftigere Krume und damit bessere Frischhaltung. Ihr Anteil an Vorläufern für Geschmackstoffe aus den Getreiderohstoffen sowie an Geschmackstoffen aus dem Restbrot runden den Geschmack des Brots angenehm ab. Dazu tragen wesentlich die niederpolymeren Kohlenhydrate bei, da sie in ihrem vorliegenden Spektrum geschmacksverstärkend wirken. Insgesamt besitzen die hergestellten Brote einen höheren ernähtungsphysiologischen Wert und sie sind von ausgezeichneter Akzeptanz.

Charakterisch ist für das erfindungsgemäße Verfahren, daß dieses nicht auf die separate und ausschließliche Herstellung eines Süßungsmittels gerichtet ist, wie es für die enzymatische Verzukkerung von stärkereichen Restmaterialien der Backwarenindustrie beschrieben worden ist (vgl. Veröffentlichung Nr. 4986 der Bundesforschungsanstalt für Getreide- und Kartoffelverarbeitung, Detmold) sondern die Modifizierung des Brühstückanteils dergestalt vorsieht, daß ein Malz- oder Mischbrühstück erhalten wird, welches zugleich eine hohe Wasserbindekapazität und Geschmacksintensität wie auch Süßkraft besitzt. Dessen Verwendung im Brotteig verleiht dem daraus gebackenen Brot die vorstehend beschriebenen Eigenschaften ohne daß irgendwelche nicht direkt aus dem Getreide stammenden Süßungsmittel dem Teig zugesetzt werden müssen.

Anders als beim Stand der Technik nach der Literaturstelle von P. Pelshenke, die weiter oben diskutiert wurde, findet beim erfindungsgemäßen Verfahren auch nicht eine lediglich unvollständige enzymatische Behandlung des gesamten Brühstückanteils statt, vielmehr wird nur ein Teil des enzymatisch zu behandelnden Brühstückanteils einem enzymatischen Abbau bis zur Glukosebildung unterzogen, woraus erst die erfindungsgemäß erzielten Vorteile resultieren.

Der weiterhin einen Bestandteil der Erfindung bildenden besonders beforzugten Ausführungsform, bei welcher mit dem Zweck, den enzymatisch behandelten Brühstückanteil als natürliches Dunkelungsmittel zur Herstellung von dunklem Brot verwenden zu können, der enzymatisch behandelte Brühstückanteil nach der Enzyminaktivierung vor dem Mischen mit dem restlichen Brühstückanteil sowie den übrigen Teigbestandteilen einer Kochbehandlung unterworfen wird, liegt die ebenfalls unerwartete Erkenntnis zugrunde, daß es gelingt, mittels des erfindungsgemäßen Verfahrens nicht nur das Hinzufügen irgendwelcher nicht direkt aus dem Getreide stammender Süßungsmittel zum Brotteig überflüssig zu machen sondern daß auch ein natürliches Dunkelungsmittel erhalten werden kann, wenn der enzymatisch behandelte Brühstückanteil nach der Erhitzung zur Inaktivierung der Enzyme durch Kochen zugefärbt wird, wobei die Zufärbung in ihrem Ausmaß natürlich von der Kochtemperatur, der Kochzeit und dem Kochdruck abhängt. Besonders bevorzugt ist es, wie dargelegt, die Kochbehandlung bei ca. 130°C für eine Zeitdauer von ca. drei Stunden durchzuführen, jedoch können natürlich auch andere Kombinationen von Temperatur, Druck und Zeit eingesetzt werden, wobei darauf zu achten ist, daß neben der Braunfärbung keine Bitterstoffbildung nicht tolerablen Ausmaßes erfolgt. Der erfindungsgemäß erzielte Eindunkelungseffekt des enzymatisch behandelten Brühstückanteiles tritt bereits bei einer Kochtemperatur von ca. 70 ° C ein, jedoch ist hier naturgemäß eine recht lange Kochzeit erforderlich, um den gewünschten Dunkelungsgrad zu erreichen. Demgegenüber läßt sich durch Temperaturerhöhung bis auf Werte von bis zu 180_{°}C die erforderliche Kochzeit naturgemäß deutlich reduzieren.

Die Erfindung wird nachstehend anhand von zwei Ausführungsbeispielen sowie von fünf Vergleichsversuchen im einzelnen erläutert.

### Ausführungsbeispiel 1

Aus 1.000 I Wasser, 500 kg Weizenschrot (Roggenschrot) und 500 kg Restbrot wird ein Mischbrühstückansatz von 2.000 kg hergestellt. Der Ansatz wird auf 95 _{°} C zur Verkleisterung der Stärke und Inaktivierung von Enzymen und Mikroorganismen erhitzt. Bereits in diesem Verfahrensschritt kann a-Amylase zur Dextrinierung der Starke zugesetzt werden. Zugleich nach dem Erreichen der Temperatur von 95 _{°} C wird der Ansatz auf 90 _{°} C abgekühlt. Nach Zugabe von 0,800 kg a-Amylase sowie 0,400 kg eines Kalziumsalzes wird der Ansatz bei dieser Temperatur 2 Studen lang dextriniert. Anschließend wird er auf 60 _{°}C abgekühlt und mit 0,600 kg Amyloglukosidase versetzt. Für den Fall einer Isomerisierung der aus dem enzymatischen Abbau stammenden Glukose im Ansatz werden außerdem 1,000 kg Glukose-Isomerase sowie 2,000 kg eines Magnesiumsalzes zugegeben. Der Ansatz wird dann in beiden Fällen bei 60 _{°} C weitere 8 Stunden lang enzymatisch behandelt. Anschließend wird der Ansatz auf 95 _{°}C solange erhitzt, bis die vorhandene Enzymaktivität vollstandig inhibiert ist. Danach erfolgt eine Abkühlung des Ansatzes auf Raumtemperatur. An dieser Stelle ist darauf hinzuweisen, daß eine Dextrinierung und Maltosebildung auch durch die Zugabe von Malz bei Temperaturen des Ansatzes zwischen 60 und 70 _{°} C erfolgen kann.

14,000 kg des in der vorstehend beschriebenen Weise der enzymatischen Behandlung unterworfenen Mischbrühstückanteils, 50,000 kg Brühstück (grob), 63,000 kg Sauerteig, 30,000 kg Roggenvollkomschrot (mittel), 10,000 kg Weizenmehl Type 1,050, 0,100 kg Hefe, 1,800 kg Salz sowie 20,000 I Wasser werden in üblicher Weise zu einem Teig verarbeitet und verbacken. Das so hergestellte Brot besitzt einen vollten brottypischen Geschmack und infolge seines hohen Quellstoffanteils ist die Krume saftig. Damit ist eine ausgezeichnete Frischhaltung gewährleistet.

### Ausführungsbeispiel 2

Aus 1,000 I Wasser, 500 kg Weizenschrot (Roggenschrot) und 500 kg Restbrot wird ein Mischbrühstückansatz von 2,000 kg hergestellt. Der Ansatz wird auf 95 _{°} C zur Verkleisterung der Stärke und Inaktivierung von Enzymen und Mikroorganismen erhitzt. Bereits in diesem Verfahrensschritt kann a-Amylase zur Dextrinierung der Stärke zugesetzt werden. Zugleich nach dem Erreichen der Temperatur von 95 _{°} C wird der Ansatz auf 90 _{°} C abgekühlt. Nach Zugabe von 0,800 kg a-Amylase sowie 0,400 kg eines Kalziumsalzes wird der Ansatz bei dieser Temperatur 2 Stunden lang dextriniert. Anschließend wird er auf 60 _{°}C abgekühlt und mit 0,600 kg Amyloglukosidase versetzt. Für den Fall einer Isomerisierung der aus dem enzymatischen Abbau stammenden Glukose im Ansatz werden außerdem 1,000 kg Glukose-Isomerase sowie 2,000 kg eines Magnesiumsalzes zugegeben.

Der Ansatz wird dann in beiden Fällen bei 60 _{°} C weitere 8 Stunden lang enzymatisch behandelt. Anschließend wird der Ansatz auf 95 _{°} C solange erhitzt, bis die vorhandene Enzymaktivität vollständig inhibiert ist.

Im Anschluß hieran wird der Ansatz bei 130 _{°} C drei Stunden lang gekocht, wodurch eine Zufärbung mit einem erwünschten Dunkelungsgrad erfolgt. Danach erfolgt Abkühlung des Ansatzes auf Raumtemperatur.

14,000 kg des in der vorstehend beschriebenen Weise der enzymatischen Behandlung unterworfenen Mischbrühstückanteils, 50,000 kg Brühstück (grob), 63,000 kg Sauerteig, 30,000 kg Roggenvollkomschrot (mittel), 10,000 kg Weizenmehl Type 1,050, 0,100 kg Hefe, 1,800 kg Salz sowie 20,000 I Wasser werden in üblicher Weise zu einem Teig verarbeitet und verbacken. Das so hergestellte Brot besitzt einen vollen brottypischen Geschmack und infolge seines hohen Quellstoffanteils ist die Krume saftig. Damit ist eine ausgezeichnete Frischhaltung gewährleistet.

Ferner weist das so hergestellte Brot infolge der Zufärbung des erfindungsgemäß behandelten Brühstückanteiles eine erwünscht dunkle Farbe auf.

## Patentansprüche

1. Verfahren zum Herstellen eines Brotteigs unter Verwendung eines Brühstückanteils, der vor dem Mischen mit den übrigen Teigbestandteilen einer enzymatischen Behandlung zum Abbau der Glukosepolymeren zu niederpolymeren Kohlehydraten unterworfen, daraufhin bis zur vollständigen Inhibierung der vorhandenen Enzymaktivität erhitzt und sodann mit den übrigen Teigbestandteilen zur Teigzubereitung gemischt wird, dadurch gekennzeichnet, daß bei der enzymatischen Behandlung des enzymatisch zu behandelnden Brühstückanteils, der 100 bis 10 Gew.-% des gesamten für die Teigzubereitung vorgesehenen Brückstückanteiles, welcher 1 bis 50 Gew.-%, bezogen auf die Trockensubstanz, der eingesetzten Getreidebestandteile beträgt, ausmacht, ein Abbau der Glukosepolymeren zu niederpolymeren Kohlenhydrate sowie deren Isomerisierung stattfindet; daß der enzymatisch zu behandelnde Brühstückanteil nach der Erhitzung bis zur vollständigen Inhibierung der vorhandenen Enzymaktivität, die auf 95° C erfolgt, abgekühlt wird, ehe er ggf. mit dem nicht enzymatisch behandelten restlichen abgekühlten Brühstückanteil sowie schließlich den übrigen Teigbestandteilen zur Teigzubereitung gemischt wird; daß der enzymatisch zu behandelnde Brühstückanteil als Getreidebestandteil sowohl Weizen- und/oder Roggenschrot als auch Restbrot enthält; und daß der enzymatisch zu behandelnde Brühstückanteil zunächst in einem ersten Behandlungsschritt mit a-Amylase und anschließend in einem zweiten Behandlungsschritt mit Amyloglukosidase enzymatisch behandelt wird, wobei die Anteile an Weizen-und/oder Roggenschrot sowie Restbrot im enzymatisch zu behandelnden Brühstückanteil derart aufeinander eingestellt werden, daß der pH-Wert des wäßrigen Ansatzes bei der a-Amylase-Behandlung 5,5 bis 6,5 und bei der Amyloglukosidase-Behandlung weniger als 5,5 beträgt.

2. Verfahren zum Herstellen eines Brotteigs unter Verwendung eines Brühstückanteils, der vor dem Mischen mit den übrigen Teigbestandteilen einer enzymatischen Behandlung zum Abbau der Glukosepolymeren zu niederpolymeren Kohlehydraten unterworfen, daraufhin bis zur vollständigen Inhibierung der vorhandenen Enzymaktivität erhitzt und sodann mit den übrigen Teigbestandteilen zur Teigzubereitung gemischt wird, dadurch gekennzeichnet, daß bei der enzymatischen Behandlung des enzymatisch zu behandelnden Brühstückanteils, der 100 bis 10 Gew.-% des gesamten für die Teigzubereitung vorgesehenen Brühstückanteiles, welcher 1 bis 50 Gew.-%, bezogen auf die Trockensubstanz, der eingesetzten Getreidebestandteile beträgt, ausmacht, ein Abbau der Glukosepolymeren zu niederpolymeren Kohlenhydraten sowie deren Isomerisierung stattfindet; daß der enzymatisch zu behandelnde Brühstückanteil nach der Erhitzung bis zur vollständigen Inhibierung der vorhandenen Enzymaktivität, die auf 95° C erfolgt, abgekühlt wird, ehe er ggf. mit dem nicht enzymatisch behandelten restlichen abgekühlten Brühstückanteil sowie schließlich den übrigen Teigbestandteilen zur Teigzubereitung gemischt wird; daß der enzymatisch zu behandelnde Brückstückanteil als Getreidebestandteil sowohl Weizen- und/oder Roggenschrot als auch Restbrot enthält; daß der enzymatisch zu behandelnde Brühstückanteil zunächst in einem ersten Behandlungsschritt mit a-Amylase und anschließend in einem zweiten Behandlungsschritt gleichzeitig mit Amyloglukosidase und Glukose-Isomerase enzymatisch behandelt wird, wobei die Anteile an Weizen- und/oder Roggenschrot sowie Restbrot im enzymatisch zu behandelnden Brühstück derart aufeinander eingestellt werden, daß der pH-Wert des wäßrigen Ansatzes bei der a-Amylase-Behandlung 5,5 bis 6,5 und bei der kombinierten Behandlung mit Amyloglukosidase und Glukose-Isomerase mindestens 5,5 beträgt.

3. Verfahren nach Anspruch 1 oder 2, dadurch gekennzeichnet, daß als Abbauenzym β-Amylase und als isomerisierendes Enzym Glukose-Isomerase eingesetzt wird.

4. Verfahren nach einem der vorangehenden Ansprüche, dadurch gekennzeichnet, daß 40 bis 20 Gew.-% des Brühstückanteils der enzymatischen Behandlung unterworfen werden.

5. Verfahren nach Anspruch 1 oder nach einem der Ansprüche 3 und 4, sofern rückbezogen auf Anspruch 1, dadurch gekennzeichnet, daß die Amyloglukosidase-Behandlung bei einer Temperatur zwischen 55 und 65 °C für eine Zeitdauer von 5 bis 10 Stunden erfolgt.

6. Verfahren nach Anspruch 2 oder nach einem der Ansprüche 3 oder 4, sofern auf Anspruch 2 zurückbezogen, dadurch gekennzeichnet, daß die gleichzeitige Einwirkung von Amyloglukosidase und Glukose-Isomerase bei einer Temperatur von ca. 65 _{°} C für eine Zeitdauer von 5 bis 10 Stunden erfolgt.

7. Verfahren nach einem der vorangehenden Ansprüche, dadurch gekennzeichnet, daß die a-Amylase-Behandlung bei einer Temperatur von ca. 90 _{°} C erfolgt.

8. Verfahren nach einem der vorangehenden Ansprüche, dadurch gekennzeichnet, daß der enzymatisch behandelte Brühstückanteil nach der Enzyminaktivierung vor dem Mischen mit dem restlichen Brühstückanteil sowie den übrigen Teigbestandteilen einer Kochbehandlung unterworfen wird.

9. Verfahren nach Anspruch 8, dadurch gekennzeichnet, daß die Kochbehandlung bei einer Temperatur von ca. 70 bis 180°C, vorzugsweise bei ca. 130°C, erfolgt.

10. Verfahren nach Anspruch 9, dadurch gekennzeichnet, daß die Kochzeit ca. 3 Stunden beträgt.

11. Verfahren nach einem der Ansprüche 8 bis 10, dadurch gekennzeichnet, daß die Kochbehandlung unter gegenüber Atmosphärendruck erhöhtem Druck erfolgt.

## Claims

1. A process for preparing a bread dough using a component processed with hot water and subjected, before mixing with the other dough components, to enzymatic treatment for breaking down the glucose polymers into low-polymer carbohydrates, then heated until complete inhibition of the existing enzyme activity and then mixed with the remaining constituents for dough-making, characterised in that during enzymatic treatment of the hot-water processed component for enzymatic treatment, which makes up 100 to 10 wt.% of the total hot-water processed component for dough preparation, which amounts to 1 to 50 wt.%, relative to dry substance, of the cereal components used, the glucose polymers are broken down to low- polymer carbohydrates and isomerised; in that the hot-water processed component for enzymatic treatment, after being heated until complete inhibition of the existing enzyme activity, which occurs at 95 _{°} C, is cooled before it is optionally mixed with the non-enzymatically treated remaining cooled hot-water processed component and finally with the remaining constituents for dough-making; in that the hot-water processed component for enzymatic treatment contains a cereal component in the form of wheat flour and/or rye flour and left-over bread; and in that the hot-water processed component for enzymatic treatment is enzymatically treated first in a first treatment step with a-amylase and then in a second treatment step with amyloglucosidase, and the proportions of wheat and/or rye flour and left-over bread in the hot-water processed component for enzymatic treatment are adjusted to one another so that the pH of the aqueous batch is 5.5 to 6.5 during treatment with a-amylase and below 5.5 during treatment with amyloglucosidase.

2. A process for preparing a bread dough using a component processed with hot water and subjected, before mixing with the other dough components, to enzymatic treatment for breaking down the glucose polymers into low-polymer carbohydrates, then heated until complete inhibition of the existing enzyme activity and then mixed with the remaining constituents for dough-making, characterised in that during enzymatic treatment of the hot-water processed component for enzymatic treatment, which makes up 100 to 10 wt.% of the total hot-water processed component for dough preparation, which amounts to 1 to 50 wt.%, relative to dry substance, of the cereal components used, the glucose polymers are broken down to low- polymer carbohydrates and isomerised; in that the hot-water processed component for enzymatic treatment, after being heated until complete inhibition of the existing enzyme activity, which occurs at 95 _{°} C, is cooled before it is optionally mixed with the non-enzymatically treated remaining cooled hot-water processed component and finally with the remaining constituents for dough-making; in that the hot-water processed component for enzymatic treatment contains a cereal component in the form of wheat flour and/or rye flour and left-over bread; in that the hot-water processed component for enzymatic treatment is enzymatically treated first in a first treatment step with a-amylase and then in a second treatment step simultaneously with amyloglucosidase and glucose isomerase, and the proportions of wheat and/or rye flour and left-over bread in the hot-water processed substance for enzymatic treatment are adjusted to one another so that the pH of the aqueous batch is 5.5 to 6.5 during treatment with a-amylase and at least 5.5 during combined treatment with amyloglucosidase and glucose isomerase.

3. A process according to claim 1 or 2, characterised in that ß-amylase is used as the decomposing enzyme and glucose-isomerase as the isomerising enzyme.

4. A process according to any of the preceding claims, characterised in that 40 to 20% by weight of the hot-water processed component is enzymatically treated.

5. A process according to claim 1 or according to claim 3 or 4 insofar as appended to claim 1, characterised in that treatment with amyloglucosidase is carried out at a temperature between 55 and 65 _{°} C for a duration of 5 to 10 hours.

6. A process according to claim 2 or claim 3 or 4 insofar as appended to claim 2, characterised in that the simultaneous action of amyloglucosidase and glucose isomerase is brought about at a temperature of about 65 _{°} C for a duration of 5 to 10 hours.

7. A process according to any of the preceding claims, characterised in that treatment with a-amylase occurs at a temperature of about 90 _{°}C.

8. A process according to any of the preceding claims, characterised in that the enzymatically treated hot-water processed component is boiled after enzyme inactivation and before mixing with the remaining part of the hot-water processed component and the other dough constituents.

9. A process according to claim 8, characterised in that boiling is carried out at a temperature of about 70 to 180 _{°} C, preferably at about 130 _{°} C.

10. A process according to claim 9, characterised in that the boiling time is about 3 hours.

11. A process according to any of claims 8 to 10, characterised in that boiling is carried out at above atmospheric pressure.

## Revendications

1. Procédé pour fabriquer une pâte à pain en utilisant une part de fragments échaudés qui, avant le mélange avec les autres composants de la pâte, est soumise à un traitement enzymatique pour la dégradation des polymères de glucose en hydrates de carbone faiblement polymérisés, puis est chauffée jusqu'à complète inhibition de l'activité enzymatique existante, et ensuite est mélangée avec les autres composants de la pâte, pour la préparation de la pâte, caractérisé en ce que, lors du traitement enzymatique de la part de fragments échaudés à traiter de façon enzymatique, qui s'élève de 100 à 10 % en poids de la part globale de fragments échaudés prévue pour la préparation de la pâte, laquelle s'élève de 1 à 50 %, rapporté au produit sec, des constituants de céréales introduits, a lieu une dégradation des polymères de glucose en hydrates de carbone faiblement polymérisés, ainsi qu'une isomérisation ; que la part de fragments échaudés à traiter de façon enzymatique est refroidie après chauffage jusqu'à complète inhibition de l'activité enzymatique existante, qui se produit à 95 _{°} C, avant d'être mélangée, pour la préparation de la pâte, avec, le cas échéant, la part de fragments échaudés restante, non traitée de façon enzymatique, refroidie et avec, finalement, les autres composants de la pâte ; en ce que la part de fragments échaudés à traiter de façon enzymatique contient, comme composant céréalier, aussi bien du gruau de froment et/ou de seigle, que du reste de pain ; et que la part de fragments échaudés à traiter de façon enzymatique est traitée d'abord dans une première étape de traitement avec de l'a-amylase et ensuite dans une deuxième étape avec de l'amyloglucosidase, les parties de gruau de froment et/ou de seigle et de reste de pain étant arrangées les unes par rapport aux autres dans la part de fragments échaudés à traiter de façon enzymatique de telle sorte que la valeur de pH de la partie ajoutée aqueuse vaut de 5,5 à 6,5 pour le traitement avec a-amylase et moins de 5,5 pour le traitement avec amyloglucosidase.

2. Procédé pour fabriquer une pâte à pain en utilisant une part de fragments échaudés qui, avant le mélange avec les autres composants de la pâte, est soumise à un traitement enzymatique pour la dégradation des polymères de glucose en hydrates de carbone faiblement polymérisés, puis est chauffée jusqu'à complète inhibition de l'activité enzymatique existante, et ensuite est mélangée avec les autres composants de la pâte, pour la préparation de la pâte, caractérisé en ce que, lors du traitement enzymatique de la part de fragments échaudés à traiter de façon enzymatique, qui s'élève de 100 à 10 % en poids de la part globale de fragments échaudés prévue pour la préparation de la pâte, laquelle s'élève de 1 à 50 %, rapporté au produit sec, des constituants de céréales introduits, une dégradation des polymères de glucose en hydrates de carbone faiblement polymérisés a lieu, ainsi qu'une isomérisation ; en ce que la part de fragments échaudés à traiter de façon enzymatique est refroidie après chauffage jusqu'à complète inhibition de l'activité enzymatique existante, qui se produit à 95 _{°} C, avant d'être mélangée, pour la préparation de la pâte, avec, le cas échéant, la part de fragments échaudés restante, non traitée de façon enzymatique, refroidie et avec, finalement, les autres composants de la pâte ; en ce que la part de fragments échaudés à traiter de façon enzymatique contient, comme composant céréalier, aussi bien du gruau de froment et/ou de seigle, que du reste de pain ; et en ce que la part de fragments échaudés à traiter de façon enzymatique est traitée de façon enzymatique d'abord dans une première étape de traitement avec de l'a-amylase et ensuite dans une deuxième étape de traitement avec, simultanément, de l'amyloglucosidase et de la glucose-isomérase, les parties de gruau de froment et/ou de seigle et de reste de pain étant arrangées les unes par rapport aux autres dans la part de fragments échaudés à traiter de façon enzymatique de telle sorte que la valeur de pH de la partie ajoutée aqueuse vaut de 5,5 à 6,5 pour le traitement avec a-amylase et au moins 5,5 pour le traitement combiné avec amyloglucosidase et glucose-isomérase.

3. Procédé selon la revendication 1 ou 2, caractérisé en ce que la ß-amylase est introduite comme enzyme de dégradation et la glucose-isomérase comme enzyme d'isomérisation.

4. Procédé selon l'une des revendications précédentes, caractérisé en ce que 40 à 20 % en poids de la part de fragments échaudés est soumis au traitement enzymatique.

5. Procédé selon la revendication 1 ou selon l'une des revendications 3 et 4, pour autant qu'elle se rapporte à la revendication 1, caractérisé en ce que le traitement avec amyloglucosidase est effectué à une température entre 55 et 65 _{°} C pendant une durée de 5 à 10 heures.

6. Procédé selon la revendication 2 ou selon l'une des revendications 3 ou 4 pour autant qu'elle se rapporte à la revendication 2, caractérisé en ce que l'action simultanée de l'amyloglucosidase et de la glucose-isomérase est effectuée à une température d'environ 65 _{°} C pendant une durée de 5 à 10 heures.

7. Procédé selon l'une des revendications précédentes, caractérisé en ce que le traitement avec a-amylase est effectué à une température d'environ 90 ° C.

8. Procédé selon l'une des revendications précédentes, caractérisé en ce que la part de fragments échaudés traitée de façon enzymatique est soumise à un traitement de cuisson après l'activation enzymatique avant le mélange avec la part de fragments échaudés restante et avec les autres composants de la pâte.

9. Procédé selon la revendication 8, caractérisé en ce que le traitement de cuisson est effectué à une température d'environ 70 à 180 _{°} C, de préférence à environ 130 ° C.

10. Procédé selon la revendication 9, caractérisé en ce que le temps de cuisson est d'environ 3 heures.

11. Procédé selon l'une des revendications 8 à 10, caractérisé en ce que le traitement de cuisson est effectué sous une pression supérieure à la pression atmosphérique.
